# EUROPEAN PATENT SPECIFICATION

(11) **EP 2 464 210 B1**
(45) Date of publication and mention of the grant of the patent: **18.12.2013**
(21) Application number: 10741953.3
(22) Date of filing: 10.08.2010
(51) Int. Cl.: A01F 15/08, A01F 21/00, F16P 3/08

(54) **AGRICULTURAL VEHICLE WITH AN ACCESS PANEL LATCH**
LANDWIRTSCHAFTLICHES FAHRZEUG MIT ZUGANGSKLAPPENVERRIEGELUNG
ENGIN AGRICOLE À VERROUILLAGE DE PANNEAU D'ACCÈS

(30) Priority: 12.08.2009 BE 200900489
(43) Date of publication of application: 20.06.2012
(73) Proprietor: CNH Belgium N.V., 8210 Zedelgem (BE)
(72) Inventor: STEEN, Pieter, 8900 Ieper (BE); VAN VOOREN, Sandor, 8340 Sijsele-Damme (BE); DUCOULOMBIER, André, 8560 Wevelgem (BE)
(74) Representative: CNH IP Department
(86) International application number: PCT/EP2010/061617
(87) International publication number: WO 2011/018456

(56) References cited:
- EP-A2- 1 767 081
- DE-A1- 2 640 292
- GB-A- 2 206 662
- US-A- 4 319 146
- US-A1- 2003 167 939
- US-A1- 2005 103 130

## Description

### Technical Field

The present invention relates to an agricultural machine with an access panel latch.

### Background Art

Though applicable to other forms of agricultural machines towed by a tractor, the invention will be described below by reference to a baler. As is generally known, a baler is a machine which picks up from the ground crop material that has previously been cut, windrowed or swathed, and forms the crop material into round or square bales. The workings of the baler, that is to say the internal machinery that forms the bales, will not be described herein as they are not of particular relevance to the present invention and as their construction is well documented in the prior art (see for example US 4,106,267). It suffices for the present invention to appreciate that the workings of the baler have many moving parts which pose a safety hazard if left exposed while the baler is in operation.

The baler derives its power from a power take off (PTO) shaft of the tractor. To ensure smooth operation of the baler, its drive incorporates a large flywheel that is connected to the PTO shaft by an overrunning, or one-way, clutch. On account of this clutch, even when the tractor engine is stopped, it is possible for the flywheel of the baler to continue rotating.

Because of this ability of the flywheel and the workings of the baler to continue moving even after the tractor engine has been stopped, it is known to provide a manually operable brake to arrest the flywheel so that servicing work may be carried out safely on the baler. The brake may for example take the form of a brake band that is anchored at one end to the frame of the baler, passes partly around the circumference of the flywheel and is connected at its other end to a toggle mechanism. An actuator or handle acts on the toggle mechanism to apply and release the brake.

In normal use, the moving parts of the baler are covered by access panels. The flywheel is covered by a hinged hood and other moving parts of the baler are protected by hinged doors. When the baler needs attention, for example if a blockage has occurred, the operator first stops the tractor and descends from the tractor cab. Next, the flywheel brake is applied to bring all the moving parts of the baler to a standstill and only when it is safe does the operator raise the hood or open one of the side doors to provide access to the workings of the baler.

A problem with existing balers is that nothing prevents an operator from inadvertently or intentionally omitting to apply the flywheel brake before opening one of the access panels, thus exposing him to a risk of severe injury. It will be clear that this problem would apply to any agricultural machine having workings driven from the PTO shaft of a tractor by way of a flywheel that is capable of overrunning.

GB 2 206 662 discloses a safety system for machinery such as an agricultural baler having exposed moving parts. The safety system comprises a mechanism for deactivating the drive means and/or for decoupling the machinery from the drive means. A sensor device is in the vicinity of the moving parts of the machinery and can trigger the deactivation by pressing the sensor device by hand. Although this document teaches that a system can be installed on the machinery which will provide for a deactivation of the drive means, the operator will again have to estimate himself when it is safe to approach the exposed moving parts of the machine.

### Disclosure of Invention

According to the present invention, there is provided an agricultural machine having an input shaft connectable to the power take off shaft of a tractor, a flywheel connected to the input shaft by way of an overrunning clutch, workings driven by the input shaft, an access panel openable to provide access to the workings of the machine and a releasable latch for holding the access panel in a closed position, characterised in that a machine further comprises a brake for arresting rotation of the flywheel (24) and an actuator for the flywheel brake movable between a braking and a release position; in that means are provided for ascertaining when the flywheel is not rotating, these means comprises means for determining when the actuator is in the flywheel braking position; and in that the latch incorporates an interlock for preventing opening of the access panel while the flywheel is rotating.

The interlock may in this case comprise a detent that normally inhibits the release of the latch and is retracted when the actuator is in the flywheel braking position.
In its simplest form, a mechanical connection in the form of a rod or a cable may be provided between the detent and the actuator of the flywheel brake.
Such a mechanical connection may not always be the most convenient, for example when there are several access panels or when an access panel is located at some distance from the brake actuator.

In such a situation, one may alternatively use an electrical connection between the detent and the actuator of the flywheel brake. For example, a switch operated by the brake actuator may energise a solenoid to retract the latch detent when the brake has been actuated.

As a further possibility, one may envisage a hydraulic connection between the detent and the brake actuator consisting of a master cylinder operated by the brake actuator and a slave cylinders acting on the latch detent.

When relying on the brake actuator to ascertain that the flywheel is stationary, one has to assume that the flywheel brake is functioning correctly. It is not however essential to make such an assumption as it is possible instead to detect the rotation of the flywheel directly.

In a further embodiment of the invention, the interlock comprises a detent that is normally retracted to allow the latch to be released and the means for ascertaining when the flywheel is not rotating is operative to generate a force only when the flywheel is rotating to urge the detent into a position in which release of the latch is inhibited.

The means for ascertaining when the flywheel is not rotating may comprise centrifugal weights rotating with the flywheel and mechanically coupled to the detent. Alternatively, they may comprise a hydraulic pump connected to a hydraulic cylinder acting on the detent. As a further possibility, they may comprise an electrical generator connected to a solenoid acting on the detent.

The invention is not restricted to any one type of latch mechanism. The preferred latch mechanism comprises a striker pin and a latch body, one mounted on the access panel and the other on the frame of the machine, wherein the latch body supports a pivotable catch plate having a recess for engaging the striker pin and ratchet teeth, a pivotable pawl for engaging in the ratchet teeth to retain the catch plate in a closed position and a manually operable release cam for disengaging the pawl out of the ratchet teeth.

In such a construction of the latch, the detent may suitably be pivotably mounted on the latch body for movement between a position in which rotation of the catch plate is inhibited even when the catch plate is released by the pawl and a release position in which the detent does not inhibit rotation of the pawl.

The interlock of the invention is only intended to prevent the access panel from being opened while the flywheel is rotating. Once an access panel has been opened, it is not necessary for it to be closed before the workings can be restarted because it is on occasions necessary to inspect the workings while they are in operation. Under such conditions, however, the operator will have started the workings intentionally and will be aware of possible dangers. The interlock therefore works in only one direction in that the operation of the workings serves to prevent release of the latch but the position of the latch has not bearing on whether or not the workings of the machine can operate.

### Brief Description of Drawings

The invention will now be described further, by way of example, with reference to the accompanying drawings, in which :
Figure 1 is a side view of a square baler showing the workings of the baler,
Figure 2 is a plan view of an access panel latch in the latched position,
Figure 3 is a perspective view from one side of the latch shown in Figure 2 immediately after it has been released, and
Figure 4 is a partially sectioned perspective view of the latch shown in Figures 2 and 3 taken from the opposite side as the latch is being released.

### Mode(s) for Carrying Out the Invention

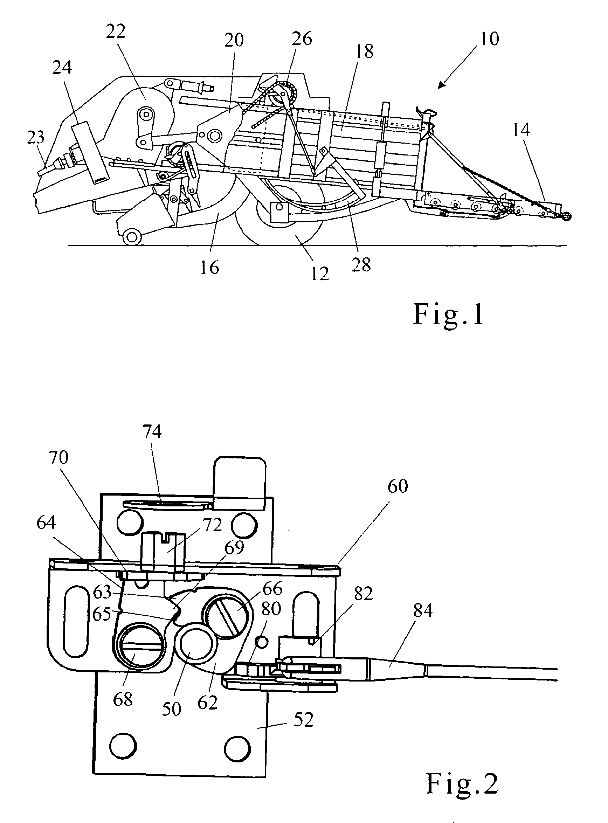

Figure 1 is a side view of a square baler 10 showing its inner workings. The baler 10 has a frame supported on the ground by means of wheels 12 and is hitched to a tractor at the left hand side of the drawing. Formed bales are discharged onto the ground from a chute 14 at the right hand side of the drawing. Crop picked up from the ground, is packed into a crop intake duct 16 and then transferred by a stuffer into a baling chamber 18. Within the baling chamber, the crop is compressed by a plunger 20 that is reciprocated by means of a gearbox 22. The gearbox 22 is driven by an input shaft 23 that is connected to the PTO shaft of the tractor. A flywheel 24 is coupled to the input shaft 23 through a one-way clutch which allows the flywheel 24 to turn faster than the input shaft 23. For completeness, Figure 1 also shows a knotter drive 26 and a needle assembly 28 that are used to wrap twine around the formed bales.

The present invention can be appreciated without an understanding of the inner workings of the baler, which will therefore not be described in further detail. For the present purposes, it suffices to understand that there are many moving parts within the baler which present a hazard when the baler is in operation. For this reason, the baler has a casing that covers its workings during normal operation but has access panels that can be opened to provide access when the baler needs to be inspected or serviced. The panels may include a hood that covers the flywheel 24 and doors on opposite sides of the baler.

It will furthermore be realised that the workings of the baler can continue moving, even after the input shaft 23 has come to standstill, on account of the large inertia of the flywheel 24 and the one-way clutch. Because of this, an actuator in the form of a brake handle (not shown) is mounted on the frame of the baler which is connected to a brake band that passes around the flywheel 24. After the tractor PTO shaft has been stopped, this flywheel brake is applied by means of the actuator to arrest the flywheel 24 before any access panel is opened to make sure that nothing accidentally causes injury.

As so far described, the baler is entirely conventional and the disadvantage from which it suffers is that, if the operator forgets or intentionally omits to operate the flywheel brake, there is nothing to prevent one of the access panels being opened.

To mitigate this problem, the present invention proposes an interlock in the access panel latch which prevents the access panel from being opened if the flywheel has not been stopped. In the embodiment to be described with reference to Figures 2 to 4, the interlock prevents the latch from being released if the brake actuator is not in the flywheel braking position. As earlier mentioned, instead of this indirect assessment that it is safe to open the access panel, one can envisage other, more direct, ways of determining that the flywheel is no longer turning.

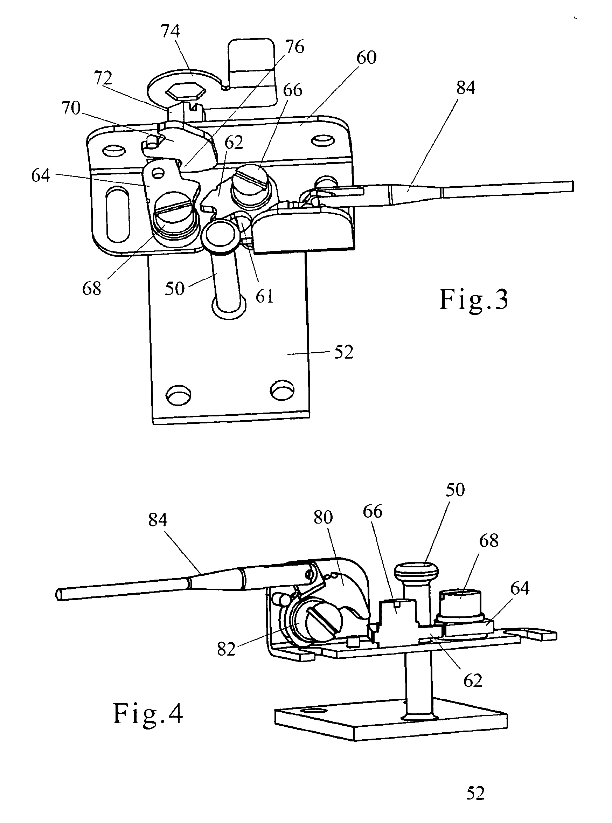

Figures 2 to 4 show a striker pin 50 mounted on a plate 52 that is attached to the hinged access panel. A latch body 60 is mounted on the frame of the baler and supports a pivoted catch plate 62 and a pivoted pawl 64. The catch plate 62 is pivoted about a slotted pin 66 and is biased counter-clockwise, as viewed in Figure 2, by a coil spring (not shown) that engages in the slot in the head of the pin 66. The catch plate has a recess 61 (see Figure 3) for receiving the striker pin 50 and two ratchet teeth 63 and 65.

The pawl 64 is likewise pivoted about a slotted pin 68 and is biased to rotate clockwise, as viewed in Figure 2, by a coil spring (not shown) engaged in the slot in the head of the pin 68. The pawl 64 has a single pawl tooth 69 to engage between the ratchet teeth 63 and 65 of the catch plate 62 when the latch is closed.

Starting from the position shown in Figure 3, to close the access panel, the striker pin 50 is moved towards the latch body 60 until it engages in the recess 61 in the catch plate 62. Further movement of the striker pin 50 causes the catch plate to pivot clockwise towards the position shown in Figure 2 and in the process it deflects the pawl 64 counter-clockwise against its spring until the ratchet tooth 63 clears the pawl tooth 69. At this point, the pawl 64 will rotate clockwise to engage its tooth 69 between the two ratchet teeth 63, 65 of the catch plate to prevent the catch plate from rotating counter-clockwise and to trap the striker pin 50 in the recess 61. The geometry of the pawl tooth 69 is such that the force applied to it by the ratchet tooth 63 when the catch plate 62 attempts to turn counter-clockwise acts towards the pivoting axis of the pawl and has no moment that will cause the pawl 64 to rotate counter-clockwise. The access panel in Figure 2 is therefore firmly latched in the closed position.

To release the latch, it is necessary manually to rotate the pawl 64 counter-clockwise to disengage its tooth 69 from the ratchet teeth 63, 65 of the catch plate 62. In the illustrated embodiment, such rotation can be effected by means of a release cam plate 70 that is rotated about an axis perpendicular to that of the pawl 64 by means of an axle with a hexagonal head 72. The release cam can be rotated clockwise as viewed in Figure 3 by inserting a coin into the hexagonal head 72 or by a small thumb operated ring spanner tool 74 that is fitted over the hexagonal head 72. When the release cam 70 is rotated clockwise, a nose 76 of the cam 70 engages the edge of the pawl 64 and pushes the pawl 64 to the left as viewed, causing the pawl 64 to rotate counter-clockwise so as to release the catch plate 62.

As so far described, the latch is conventional and allows the latch to be released and the access panel to be opened regardless of the state of the flywheel and its brake.

A mechanical interlock operated by the brake actuator is provided in the embodiment of the invention shown in Figures 2 to 4. A detent 80, best seen in Figure 4, is pivotable mounted about a slotted pin 82 and biased by a spring (not shown) clockwise as viewed in Figure 4 so as normally to make contact with the base of the latch body 60 and to obstruct the counter-clockwise rotation of the catch plate 62. When in this position, the detent 80 prevents the latch from being released even if the pawl tooth 69 is manually deflected out of engagement with the ratchet teeth 63, 65. The latch can only be released if at the same time as turning the hexagonal head 72, the detent 80 is pivoted into the position shown in Figure 4 where it clears the catch plate 62 and no longer obstructs its movement.

For this purpose, the detent 80 is connected by a rod 84 (which may alternatively be a Bowden cable) of which the other end is connected to the flywheel brake actuator. When the flywheel brake is applied, it normally brings the flywheel to a standstill very rapidly, and it is therefore safe to release the latch at the same time as the brake is applied. When the operator then rotates the hexagonal head 72 to move the pawl 64 into a disengaged position, the catch plate 62 will be free to rotate to allow the striker pin 50 to exit from the recess 61 and the access panel to open.

Instead of the rod 84, which provides a mechanical linkage between the latch and the brake actuator, one may use a hydraulic or electrical linkage.

As a further possibility, the detent 80 may be spring biased to retract automatically when the flywheel stops turning. In this case, a force generated by the rotating flywheel may be used to move the detent into a position in which it interferes with the rotation of the catch plate 62. The force may be generated mechanically, such as by means of centrifugal weights rotated by the flywheel, hydraulically, such as by a flywheel driven pump, or electrically, such as by a flywheel driven generator.

The invention as defined in the claims is not limited to the exemplary embodiments as described and shown in the Figures, but can equally comprise combinations and variations that fall within the scope of the claims.

## Claims

1. An agricultural machine having an input shaft (23) connectable to the power take off shaft of a tractor, a flywheel (24) connected to the input shaft (23) by way of an overrunning clutch, workings driven by the input shaft (23), an access panel openable to provide access to the workings of the machine and a releasable latch for holding the access panel in a closed position, **characterised in that** the machine further comprises a brake for arresting rotation of the flywheel (24) and an actuator for the flywheel brake movable between a braking and a release position; **in that** means are provided for ascertaining when the flywheel is not rotating, these means comprises means for determining when the actuator is in the flywheel braking position; and **in that** the latch incorporates an interlock for preventing opening of the access panel while the flywheel (24) is rotating.

2. An agricultural machine as claimed in claim 1, wherein the interlock comprises a detent (80) that normally inhibits the release of the latch and is retracted when the actuator is in the flywheel braking position.

3. An agricultural machine as claimed in claim 2, wherein a mechanical connection in the form of a rod (84) or a cable is provided between the detent (80) and the actuator of the flywheel brake.

4. An agricultural machine as claimed in claim 2, wherein an electrical connection is provided between the detent (80) and the actuator of the flywheel brake.

5. An agricultural machine as claimed in claim 2, wherein a hydraulic connection is provided between the detent (80) and the actuator of the flywheel brake.

6. An agricultural machine as claimed in claim 1, wherein the interlock comprises a detent (80) that is normally retracted to allow the latch to be released and the means for ascertaining when the flywheel (24) is not rotating is operative to generate a force only when the flywheel (24) is rotating to urge the detent (80) into a position in which release of the latch is inhibited.

7. An agricultural machine as claimed in claim 6, wherein the means for ascertaining when the flywheel (24) is not rotating comprises centrifugal weights rotating with the flywheel and mechanically coupled to the detent (80).

8. An agricultural machine as claimed in claim 6, wherein the means for ascertaining when the flywheel (24) is not rotating comprises a hydraulic pump connected to a hydraulic cylinder acting on the detent (80).

9. An agricultural machine as claimed in claim 6, wherein the means for ascertaining when the flywheel (24) is not rotating comprises an electrical generator connected to a solenoid acting on the detent (80).

10. An agricultural machine as claimed in any preceding claim, wherein the latch comprises a striker pin (50) and a latch body (60), one mounted on the access panel and the other on the frame of the machine, wherein the latch body (60) supports a pivotable catch plate (62) having ratchet teeth (63, 65) and a recess (61) for engaging the striker pin (50), a pivotable pawl (64) for engaging in the ratchet teeth (63, 65) to retain the catch plate (62) in a closed position and a manually operable release cam (70) for disengaging the pawl (64) from the ratchet teeth (63, 65).

11. An agricultural machine as claimed in claim 10 when referring to any of claims 2 to 9, wherein the detent (80) is pivotably mounted on the latch body (60) for movement between a position in which rotation of the catch plate (62) is inhibited even when the catch plate (62) is released by the pawl (64) and a release position in which the detent (80) does not inhibit rotation of the pawl (64).

## Patentansprüche

1. Landwirtschaftliche Maschine mit einer Eingangswelle (23), die mit der Zapfwelle eines Traktors verbindbar ist, einem Schwungrad (24), das mit der Eingangswelle (23) über eine Freilaufkupplung verbunden ist, mit Betriebsseinheiten, die von der Eingangswelle (23) angetrieben werden, mit einer Abdeckplatte, die geöffnet werden kann, um Zugang an die Arbeitseinheiten der Maschine zu erlangen, und mit einem lösbaren Riegel zum Halten der Abdeckplatte in einem geschlossenen Zustand, **dadurch gekennzeichnet, dass** die Maschine weiterhin eine Bremse zum Arretieren der Drehung des Schwungrades (24) und ein Stellglied für die Schwungrad-Bremse umfasst, das zwischen einer Bremsstellung und einer Freigabestellung beweglich ist, und dass Einrichtungen zur Feststellung vorgesehen sind, ob das Schwungrad sich nicht dreht, wobei diese Einrichtungen Einrichtungen zur Feststellung, ob sich das Stellglied in der Schwungrad-Bremsstellung befindet, umfassen, und dass der Riegel eine Sperreinrichtung beinhaltet, die ein Öffnen der Zugangsplatte während einer Drehung des Schwungrades (24) verhindert.

2. Landwirtschaftliche Maschine nach Anspruch 1, bei der die Sperreinrichtung eine Arretierung (80) umfasst, die normalerweise das Lösen des Riegels verhindert, und die zurückgezogen wird, wenn sich das Stellglied in der Schwungrad-Bremsstellung befindet.

3. Landwirtschaftliche Maschine nach Anspruch 2, bei der eine mechanische Verbindung in Form einer Stange (84) oder eines Kabels zwischen der Arretierung (80) und dem Stellglied der Schwungrad-Bremse vorgesehen ist.

4. Landwirtschaftliche Maschine nach Anspruch 2, bei der eine elektrische Verbindung zwischen der Arretierung (80) und dem Stellglied der Schwungrad-Bremse vorgesehen ist.

5. Landwirtschaftliche Maschine nach Anspruch 2, bei der eine hydraulische Verbindung zwischen der Arretierung (80) und dem Stellglied der Schwungrad-Bremse vorgesehen ist.

6. Landwirtschaftliche Maschine nach Anspruch 1, bei der die Sperreinrichtung eine Arretierung (80) einschließt, die normalerweise zurückgezogen ist, um eine Freigabe des Riegels zu ermöglichen, und bei der die Einrichtung zur Feststellung, ob das Schwungrad (24) sich nicht dreht, betreibbar ist, um eine Kraft lediglich dann zu erzeugen, wenn sich das Schwungrad (24) dreht, um die Arretierung (80) in eine Position zu drücken, in der ein Lösen des Riegels verhindert ist.

7. Landwirtschaftliche Maschine nach Anspruch 6, bei der die Einrichtungen zur Feststellung, ob sich das Schwungrad (24) nicht dreht, Zentrifugalgewichte umfasst, die sich mit dem Schwungrad drehen und mechanisch mit der Arretierung (80) verbunden sind.

8. Landwirtschaftliche Maschine nach Anspruch 6, bei der die Einrichtungen zur Feststellung, ob sich das Schwungrad (24) nicht dreht, eine Hydraulikpumpe umfassen, die mit einem Hydraulikzylinder verbunden ist, der auf die Arretierung (80) wirkt.

9. Landwirtschaftliche Maschine nach Anspruch 6, bei der die Einrichtungen zur Feststellung, ob sich das Schwungrad (24) nicht dreht, einen elektrischen Generator umfassen, der mit einer Magnetspule verbunden ist, die auf die Raste (80) wirkt.

10. Landwirtschaftliche Maschine nach einem der vorhergehenden Ansprüche, bei dem der Riegel einen Schließbolzen (50) und einen Riegelkörper (60) umfasst, von denen einer auf der Abdeckplatte und der andere auf dem Rahmen der Maschine befestigt ist, wobei der Riegelkörper (60) eine schwenkbare Fangplatte (62) trägt, die Klinkenzähne (63, 65) und eine Ausnehmung (61) für den Eingriff des Schließbolzens (50) aufweist, wobei ein schwenkbarer Pfosten (64) für den Eingriff in den Klinkenzahn (63, 65) vorgesehen ist, um die Fangplatte (62) in einer geschlossenen Stellung zu halten, und ein manuell betätigtbarer Auslösenocken (70) für das Ausrücken des Pfostens (64) aus den Klinkenzähnen (63, 65) vorgesehen ist.

11. Landwirtschaftliche Maschine nach Anspruch 10 unter Rückbeziehung auf einem der Ansprüche 2 bis 9, bei der die Arretierung (80) schwenkbar auf dem Riegelkörper (60) für eine Bewegung zwischen einer Position, in der die Drehung der Fangplatte (62) selbst dann gesperrt ist, wenn die Fangplatte (62) durch den Pfosten (64) gelöst wird, und einer Freigabestellung befestigt ist, in der die Arretierung (80) eine Drehung des Pfostens (64) nicht verhindert.

## Revendications

1. Engin agricole comportant un arbre d'entrée (23) pouvant être connecté à l'arbre de prise de force d'un tracteur, un volant moteur (24) connecté à l'arbre d'entrée (23) au moyen d'un embrayage à roue libre, un dispositif de travail entraîné par l'arbre d'entrée (23), un panneau d'accès pouvant être ouvert pour fournir un accès au dispositif de travail de l'engin et un mécanisme de verrouillage pouvant être relâché destiné à maintenir le panneau d'accès en position fermée, **caractérisé en ce que** l'engin comprend en plus un frein pour arrêter la rotation du volant moteur (24) et un actionneur pour le frein de volant moteur mobile entre une position de freinage et une position de relâchement, **en ce que** des moyens pour vérifier que le volant moteur ne tourne pas sont prévus, ces moyens comprenant des moyens pour déterminer si l'actionneur est en position de freinage de volant moteur, et **en ce que** le mécanisme de verrouillage incorpore un dispositif de sécurité pour empêcher l'ouverture du panneau d'accès pendant que le volant moteur (24) tourne.

2. Engin agricole selon la revendication 1, **caractérisé en ce que** le dispositif de sécurité comprend un mécanisme d'arrêt (80) qui empêche normalement le relâchement du mécanisme de verrouillage et est rétracté lorsque l'actionneur est dans la position de freinage de volant moteur.

3. Engin agricole selon la revendication 2, **caractérisé en ce qu'**une liaison mécanique sous forme d'une tige (84) ou d'un câble est prévue entre le mécanisme d'arrêt (80) et l'actionneur du frein de volant moteur.

4. Engin agricole selon la revendication 2, **caractérisé en ce qu'**une liaison électrique est prévue entre le mécanisme d'arrêt (80) et l'actionneur du frein de volant moteur.

5. Engin agricole selon la revendication 2, **caractérisé en ce qu'**une liaison hydraulique est prévue entre le mécanisme d'arrêt (80) et l'actionneur du frein de volant moteur.

6. Engin agricole selon la revendication 1, **caractérisé en ce que** le dispositif de sécurité comprend un mécanisme d'arrêt (80) qui est normalement rétracté pour permettre au mécanisme de verrouillage d'être relâché et les moyens pour vérifier que le volant moteur (24) ne tourne pas sont fonctionnels pour générer une force uniquement lorsque le volant moteur (24) tourne afin de contraindre le mécanisme d'arrêt (80) dans une position dans laquelle le relâchement du mécanisme de verrouillage est empêché.

7. Engin agricole selon la revendication 6, **caractérisé en ce que** les moyens pour vérifier que le volant moteur (24) ne tourne pas comprennent des masselottes tournant avec le volant moteur et accouplées mécaniquement au mécanisme d'arrêt (80).

8. Engin agricole selon la revendication 6, **caractérisé en ce que** les moyens pour vérifier que le volant moteur (24) ne tourne pas comprennent une pompe hydraulique connectée à un vérin hydraulique agissant sur le mécanisme d'arrêt (80).

9. Engin agricole selon la revendication 6, en ce que les moyens pour vérifier que le volant moteur (24) ne tourne pas comprennent un générateur électrique connecté à une électrovanne agissant sur le mécanisme d'arrêt (80).

10. Engin agricole selon l'une quelconque des revendications précédentes, **caractérisé en ce que** le mécanisme de verrouillage comprend une goupille d'arrêt (50) et un corps de verrou (60), l'un étant fixé sur le panneau d'accès et l'autre sur le châssis de l'engin, **en ce que** le corps de verrou (60) porte une plaque d'accrochage pivotante (62) comportant des dents d'encliquetage (63, 65) et un enfoncement (61) pour engager la goupille d'arrêt (50), un doigt pivotant (64) destiné à s'engager dans les dents d'encliquetage (63, 65) afin de maintenir la plaque d'accrochage (62) en position fermée et une came de libération pouvant être actionnée manuellement (70) pour désengrener le doigt (64) des dents d'encliquetage (63, 65).

11. Engin agricole selon la revendication 10 lorsqu'elle se réfère à l'une quelconque des revendications 2 à 9, **caractérisé en ce que** le mécanisme d'arrêt (80) est monté de façon pivotante sur le corps de verrou (60) pour permettre un mouvement entre une position dans laquelle la rotation de la plaque d'accrochage (62) est empêchée même lorsque la plaque d'accrochage (62) est relâchée par le doigt (64) et une position de relâchement dans laquelle le mécanisme d'arrêt (80) n'empêche pas la rotation du doigt (64).
